# EUROPEAN PATENT APPLICATION

(11) **EP 3 182 700 A1**
(43) Date of publication of application: **21.06.2017**
(21) Application number: 15275269.7
(22) Date of filing: 18.12.2015
(51) Int. Cl.: H04N 7/18, B64G 1/10

(54) **CONTINUOUS VIDEO FROM SATELLITES**

(71) Applicant: Airbus Defence and Space Limited, Stevenage Hertfordshire SG1 2AS (GB)
(72) Inventor: The designation of the inventor has not yet been filed
(74) Representative: Hewett, Jonathan Michael Richard

(57) **Abstract**

There is provided a satellite for observing a target from space, comprising an image capturing module for capturing an image of a target moving relative to the satellite, an image processing module for processing one or more images captured by the image capturing module and for outputting the processed one or more images representing the observed target, and a communications module for communicating with at least one other satellite via an inter-satellite link and for communicating with a ground station, wherein the communications module is arranged to receive an instruction to capture one or more images of a target, in which the instruction contains first scene information relating to the target to be imaged, the image capture module and image processing module are arranged to initiate capture and processing of at least one image of the target using the received first scene information, wherein the communications module is further arranged to transmit second scene information comprising information relating to the target to at least one of the other satellites such that at least one of the other satellites can initiate imaging of the target. A satellite constellation, ground station, and ground control method are also provided.

## Description

The present invention relates to provision of a video-capturing function by a satellite constellation, and particularly, but not exclusively, to the continuous observation of a target on the Earth's surface.

During current Earth observation missions for defence and security, as well as for commercial applications, still images can be provided to a ground station from space on an image-by-image basis, each image in response to a user request. Typically, a user requests that an image is provided from space, a service provider determines when a satellite can capture the requested image, and then the satellite will be tasked to capture the image when it is at a location enabling the capture.

Some systems can also provide limited video sequences from a single platform. For example, video cameras on the International Space Station (ISS) can create a video scene as the ISS passes overhead. A gimbal, an example of which is provided by Urthecast, can be used to lock a camera onto the required scene, dynamically pointing the camera's telescope to the target for the duration of the transit of the ISS above the target. Satellites such as Pleiades and Skysat can also perform dynamic repointing of spacecraft carrying video cameras to maintain a scene in view.

There is, however, a limitation on the length of the video sequences which can be recorded, constrained by the position and motion of the satellite relative to the target to be imaged. Satellites have predetermined orbital paths, and so the ability of a video camera on the satellite to capture a video sequence of a target is limited to the time period within which the position of the satellite on the orbital path is above the position of the target. Thereafter, there is a potentially long period of time, such as hours or days, before the satellite completes its orbit so that it returns to a position above the target to continue observation.

Accordingly, there is a need to enhance the video-capturing function which can be provided by satellite systems to enable wider temporal and spatial coverage which is not constrained in the manner described above. Such an enhancement would have the benefit that many new applications can be unlocked, such as continuous Earth observation and advanced surveillance techniques, observing target areas for much longer periods of time.

Embodiments of the present invention aim to address this need through providing a system which makes uses of collaborative tasking between multiple satellites in a constellation, enabling continuous video coverage.

According to an aspect of the present invention, there is provided a satellite for observing a target from space, comprising an image capturing module for capturing an image of a target moving relative to the satellite, an image processing module for processing one or more images captured by the image capturing module and for outputting the processed one or more images representing the observed target, and a communications module for communicating with at least one other satellite via an inter-satellite link and for communicating with a ground station, wherein the communications module is arranged to receive an instruction to capture one or more images of a target, in which the instruction contains first scene information relating to the target to be imaged, the image capture module and image processing module are arranged to initiate capture and processing of at least one image of the target using the received first scene information, wherein the communications module is further arranged to transmit second scene information comprising information relating to the target to at least one of the other satellites such that at least one of the other satellites can initiate imaging of the target.

The first scene information may comprise information defining the location of the target at the start of a time period in which the target is to be imaged by the image capturing module, and the second scene information may comprise information defining the location of the target at or before the end of the time period in which the target is to be imaged by the image capturing module.

The first and/or second scene information may further comprise one or more of: target movement information, terrain information, image processing parameters, and a synchronization command.

The image processing parameters may comprise information relating to one or more of image brightness, image contrast, image focus, image resolution, image timing, viewing angle, field of view, and location of satellite.

The communications module may be arranged to transmit the output processed images and information defining the location of the satellite to the ground station or to at least one other satellite.

The image processing module may be arranged to process images of the target to output a video sequence capturing the target, in which the image processing may be performed in a manner which is dependent on the field of view of the image capturing module, and the communications module may be arranged to transmit the video sequence and information defining the location of the satellite to the ground station or to at least one other satellite.

The image-capturing module may be arranged to search for the target within a field of view and to track the target identified by the search.

The satellite may further comprise a controller arranged to predict, from one or more images output by the image processing module, when a target is to temporarily disappear from a field of view of the image capturing module, and to transmit the second scene information to at least one of the other satellites such that at least one of the other satellites can initiate imaging of the targets during the time period when the target has temporarily disappeared from the field of view of the image capturing module.

The satellite may be arranged to adjust its position and/or attitude to enable tracking of the moving target.

The communications module may be arranged to transmit the second scene information when the angle between the satellite and the ground target reaches a predetermined limit.

According to another aspect of the present invention, there is provided a constellation of satellites comprising a plurality of satellites as described above, in which the output of the second scene information by the respective communications module of each satellite is such that the constellation is configured such that a continuous video sequence of a target moving relative to the constellation can be produced from a combination of processed images output by the respective image processing units of each satellite.

The ground station may be arranged to produce a continuous video sequence of the target from the combination of one or more processed images output by the respective image processing units of each satellite.

A first satellite and a second satellite may be arranged to simultaneously observe the target and the ground station may be arranged to select the one or more processed images output by one of the first and second satellites for use in formation of a continuous video sequence of the target based on respective fields of view of the first and second satellites.

According to another aspect of the present invention, there is provided a ground station comprising a communications module to transmit to a first satellite a first instruction to capture one or more images of a target, in which the instruction contains first scene information relating to the target to be imaged, and to receive first one or more processed images or a first video sequence of the target and second scene information comprising information relating to the target from the first satellite, wherein the communications module is further arranged to transmit to a second satellite a second instruction to capture one or more images of the target, in which the second instruction contains the second scene information relating to the target to be imaged, and the communications module is arranged to receive second one or more processed images of the target or a second video sequence from the second satellite, the ground station further comprising a video processing module to combine the first and second one or more processed images of the target or the first and second video sequences of the target to form a single continuous video sequence capturing the target.

According to another aspect of the present invention, there is provided a ground station control method, comprising transmitting to a first satellite a first instruction to capture one or more images of a target, in which the instruction contains first scene information relating to the target to be imaged, receiving first one or more processed images or a first video sequence of the target and second scene information comprising information relating to the target from the first satellite, autonomously identifying a second satellite and transmitting to the second satellite a second instruction to capture one or more images of the target, in which the second instruction contains the second scene information relating to the target to be imaged, receiving second one or more processed images of the target or a second video sequence from the second satellite, and combining the first and second one or more processed images of the target or the first and second video sequences of the target to form a single continuous video sequence capturing the target.

The systems and method of the present invention may enable the provision of instant, on-demand image from any point within the satellite coverage area, potentially from any point on the globe.

Embodiments of the present invention will be described by way of example only, with reference to the accompanying figures, in which:
Figure 1 illustrates a constellation of satellites according to an embodiment of the present invention;
Figure 2 illustrates a satellite handover process according to an embodiment of the present invention;
Figure 3 illustrates the optical payload of a satellite according to an embodiment of the present invention;
Figure 4 illustrates the combination of images having different viewing angles, according to an embodiment of the present invention; and
Figure 5 is a flow chart illustrating transfer or responsibility for target observation between two satellites.

Where certain elements of the present invention can be partially or fully implemented using known components, only those portions of such known components that are necessary for an understanding of the present invention are described, and detailed descriptions of other portions of such known components are omitted so as not to obscure the invention. In the present invention, an embodiment showing a singular component should not preclude other embodiments including a plurality of the same component, and vice-versa, unless explicitly stated otherwise herein.

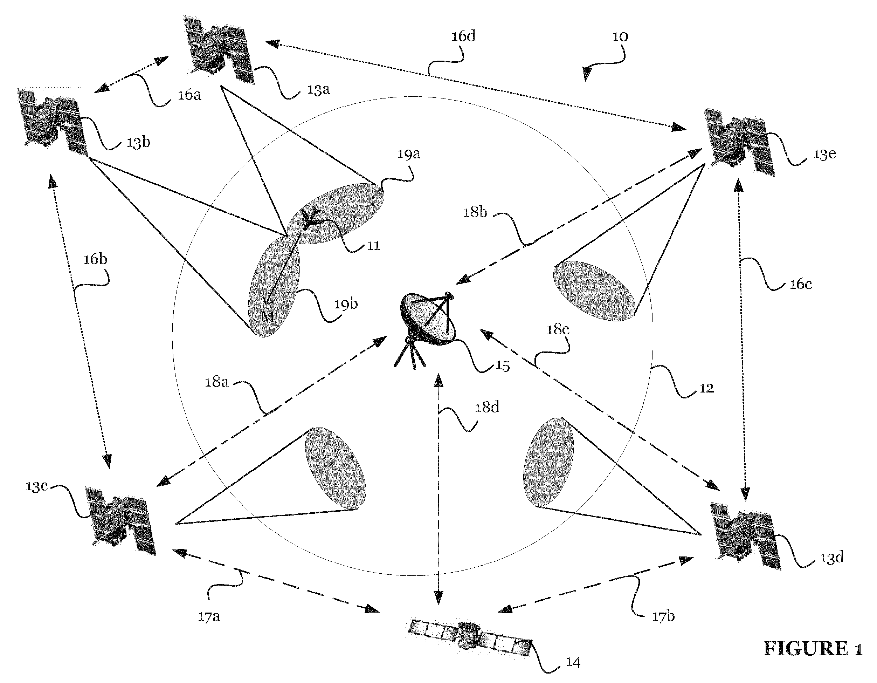

Figure 1 illustrates a constellation 10 of satellites embodying the present invention in a configuration enabling continuous observation of a target 11. In the present embodiment, the target 11 is illustrated as an aircraft travelling above the surface of the Earth 12 with a particular direction of motion M, and its size and position are shown in exaggerated form for the purpose of clarifying the following explanation. The constellation 10 contains a group of observation satellites 13a, 13b, 13c, 13d, 13e, an intermediary geostationary satellite 14, and a ground station 15 on Earth 12. Figure 1 also illustrates the communication mechanisms 16a, 16b, 16c, 16d which are present between different observation satellites 13a, 13b, 13c, 13d, 13e (inter-satellite link, ISL), the links 17a, 17b between observation satellites 13c, 13d and the geostationary satellite 14 and between some of the satellites and the ground station 15 via uplink/downlink paths 18a, 18b, 18c, 18d. The ground station 15 may enable configuration of the constellation 10 as a whole, and of individual satellites within the constellation 10, and software or hardware running on the ground station 15 enables a control application to be operated by a user to configure the status and position of each satellite, to specify of one or more targets for observation, and control of the target observation process.

The constellation 10 of Figure 1 may consist of hundreds or thousands of satellites in a Low Earth Orbit (LEO), at altitude of 500-1,500km, or several satellites in a Medium Earth Orbit (MEO), at an altitude of 8,000-26,000km.

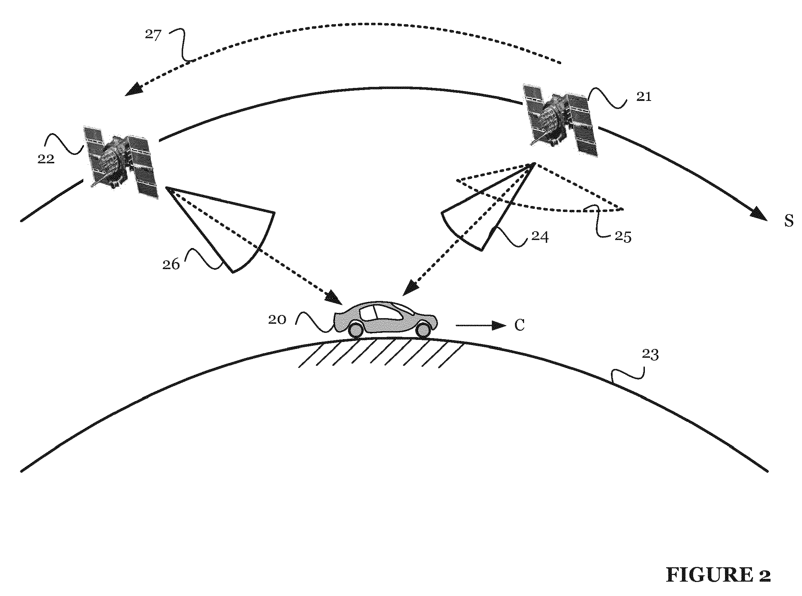

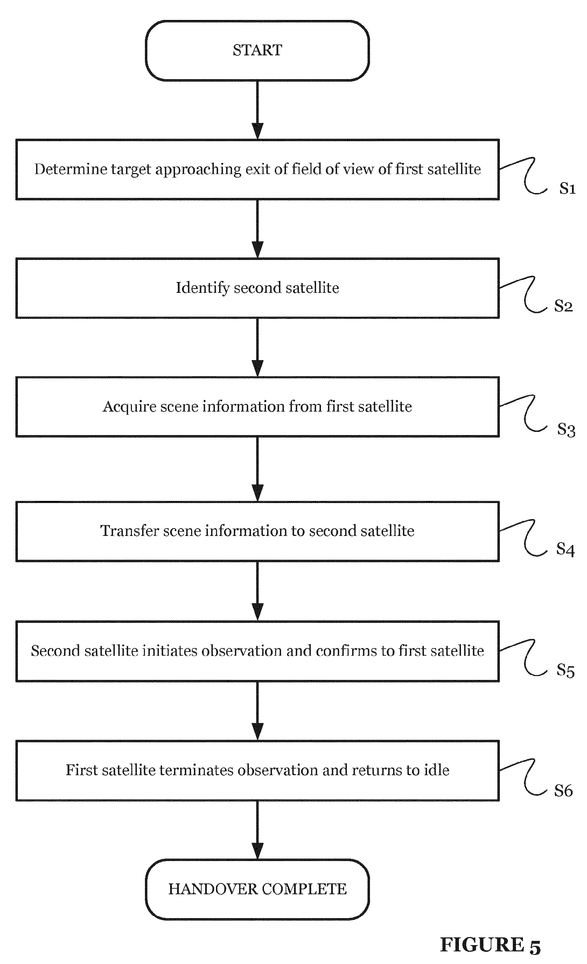

A first satellite 13a of the constellation 10 is illustrated as observing the target 11 within its field of view 19a. A second satellite 13b is illustrated as having a field of view 19b which is adjacent to that of the first satellite 13a and is anticipating the initiation of the observation of the target 11 once the target 11 transitions from the first field of view 19a to the second field of view 19b. The handover of responsibility for the observation is illustrated in more detail with reference to Figures 2 and Figure 5. In Figure 1, the second satellite 13b has been either manipulated via a control algorithm running at the ground station 15 or on-board the second satellite 13b to be in a position having field of view 19b adjacent to that of the first satellite 13a, or selected for target observation on a "nearest neighbour" basis, namely that it is the satellite having a position which is closest to that of the first satellite 13a before any position manipulation.

Figure 2 illustrates a simplified representation of a handover process according to an embodiment of the present invention. In the present embodiment, a car 20, travelling with direction of motion C is observed initially by a first satellite 21, and later by a second satellite 22. The car 20 is moving along the Earth's surface 23, and the first and second satellites are both illustrated as orbiting above the Earth's surface 23 in the direction S, from left to right, with the first satellite 21 ahead of the second satellite 22. Consequently, there is relative movement between each satellite 21, 22 and the car 20. At a first point of time, the car is in the field of view 24 of the first satellite. As described below, the field of view 24 of the first satellite 21 can be adjusted within a zone referred to as the "field of regard" 25 of the first satellite 21, as the first satellite 21 continues along its orbital path. There comes a second point in time when the car 20 can no longer be observed within the field of regard 25 of the first satellite 21 due to the movement of the first satellite 21, and observation must be performed by a second satellite 22 having a field of view 26 which can capture the car 20. The first satellite 21 transfers information to the second satellite 22 over a communications link 27 to enable the second satellite 22 to continue observing the car 20 in a manner which enables video sequences captured by the first and second satellites 21, 22 to be combined as described below to achieve a continuous observation of the car 20. In some embodiments, in addition to the handover process as described above, a handover of communication between the satellites and the ground station may also be performed in cases where the satellites are communicating directly with the ground station in real time, so that whereas a first satellite 21 might be communicating observation of the car 20 to a ground station, once the handover is performed the second satellite 22 begins communication of observation of the car 20 to the ground station.

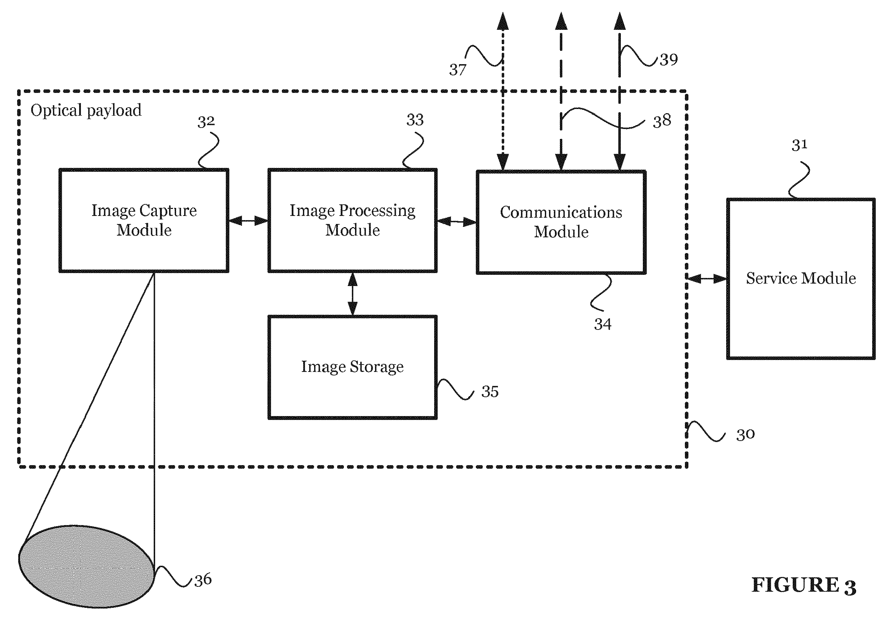

Figure 3 is a functional illustration of the components of an individual satellite of the constellation 10 of Figure 1 which are associated with the video capture technique of the present invention, according to an embodiment of the invention. The specific nature of each of the satellites of the constellation 10 may different, and the associated hardware may be dependent on particular manufacturers or satellite designs, but the functional illustration of Figure 3 represents those features which are common to each of the observation satellites of embodiments of the present invention.

The components illustrated in Figure 3 are referred to collectively in the following description as an "optical payload" 30, associated with the image capture process described below. In addition, a satellite according to embodiments of the present invention contains a service module 31 to support the optical payload 30, and to enable other satellite functions. The service module 31 may comprise a power system and the main on-board control mechanism of the satellite, a propulsion system to enable satellite position manipulation, and other data handling systems for handling general purpose communications or signal processing. The satellite of embodiments of the present invention can thus be considered as an adapted satellite through the inclusion of the optical payload 30.

The optical payload 30 comprises four functional modules - an image capturing module 32, an image processing module 33, a communications module 34 and a storage 35. These four modules are installed on the satellite and arranged to communicate with the main on-board of control electronics of the satellite, although in another embodiment of the present invention, the optical payload 30 may comprise its own controller which may act a slave to the master controller in the service payload 31. The term "module" is to be understood herein as interchangeable with "unit" or "device" and represents hardware, software, or a combination of hardware and software. Although the term "optical" is used to describe the payload 30, the payload 30 could also be implemented as part of a Synthetic Aperture Radar (SAR), and the term does not imply any limitation on the type of image capturing module 32 which could be used.

In the present embodiment, the image capturing module 32 is an optical device or detector for recording images or video sequences, of types well known in the art, for example a video camera. The image capturing module 32 has a sensor such as a charge-coupled device (CCD) sensitive to radiation appropriate to the intended observation application of the satellite, for example, visible light or infra-red light. In addition, the image capturing module 32 has associated optics for zooming and focusing on a particular target. In some embodiments, the optics include a telescope. In some embodiments, the image capturing module 32 includes a single camera with single or multiple fields of view, but in other embodiments, two or more cameras may be present so as to provide stereoscopic imaging, or to increase the number of fields of view, or the overall coverage of the image capturing module 32. A representative field of view 36 is illustrated in Figure 3 for the case where the image capturing module 32 has a single field of view.

The image capturing module 32 is configured to be able to record a video sequence of one or more targets, but in addition to recording a video sequence, the image capturing module 32 may also be capable of recording still images of the target(s). A still image may be captured at a higher resolution and/or higher sensitivity than the frames of a video sequence and so the use of still images may enhance the target observation process. In some embodiments, the still images are captured by a separate camera or detector from the video camera. For example, the still image camera may provide high resolution imaging of a specific moving target or small area (e.g. 1km x 1km), whereas the video camera would cover a larger area, such as 100km x 100km. The still image camera could either be in a fixed position with respect to the primary detector or it could implement a steering mirror so that it could independently track a moving target. In some embodiments, the still image camera and the video camera can be controlled track separate targets independently.

In the following description, it will be assumed that the observation process relates to a single target. There is no restriction on the nature of a target which can be imaged. Examples of targets to be observed are vehicles, including spacecraft and other satellites.

In addition to the imaging function of the image capturing module 32, metadata may be recorded by the image capturing module 32 such as geographical information or timing information, to facilitate subsequent processing and synchronisation of the captured images. Alternatively, such data may be provided to the image processing module 33 from the service payload 31.

The image capturing module 32 is configured to be able to capture a video sequence of the target while the target is within what will be referred to herein as the field of view 36 of the image capturing module, namely the physical region which is within the line of sight of the image capturing module 32. The size of the field of view 36 is a function of the hardware of the image capturing module 32 and the associated optical components and electronic processing circuitry for driving the image sensors, such that wide-angle lenses attached to the image capturing module 32 increase the size of the field of view 36, while focusing and zoom optics may narrow down the field of view 36. The position of the field of view 36 is determined by the position and orientation of the image capturing module 32, and also the position and attitude of the satellite, and will be described in more detail below.

The target to be observed may be stationary or moving, relative to the field of view 36 of the image capturing device. As long as the target is within the field of view 36, the target can be observed by the satellite and a video sequence can be captured by the image capturing device. When the target leaves the field of view, steps are taken to transfer responsibility for observing the target to another satellite, as detailed below.

In some embodiments, the image capturing module has the ability to perform image capture by reading data in a "windowed" mode, in other words, restricting its field of view to a particular window, enabling a reduction in the data to be acquired and processed by the image processing module. The windowed area could be determined on-the-fly.

The image processing module 33 is for processing and outputting one or more images captured by the image capturing module 32. The image processing module 33 comprises software running on, for example, a microcontroller, hardware, or a combination of hardware and software. Image processing includes conversion of electronic signals generated at the image capturing module 32 to form an image or a sequence of images. The created image data would include data passed from the service module 31 (relating to the spacecraft position and orientation) to the image processing module 33. In the case of a video capturing operation, for example, recording video of the order of 10 frames per second, the image processing module 33 constructs a video file using image processing techniques defined, for example, by the Moving Picture Experts Group (MPEG), so as to compress the captured video into an appropriate file (e.g. an '.mp4' file) for further manipulation, such as storage, transmission to another satellite, or transmission to a ground station. In the case of a still image capturing operation, the image processing module 33 constructs an image file using image processing techniques defined, for example, by the Joint Photographic Experts Group (JPEG). It will be appreciated, however, that the present invention is not restricted to MPEG or JPEG processing and that other appropriate image and video compression techniques may be used. It is also not essential for images or videos to be compressed at all, and sequences of raw images may be used where required and permitted by available data storage levels.

The created video or image files are stored locally in a memory 35 or buffer to enable their subsequent transmission to an end user via a ground station, or to other satellites. The memory 35 also stores captured metadata as described above. In some embodiments, video can be streamed in real-time from the image processing module 33, or substantially in real-time, back to the ground station.

In addition to processing performed for the purposes of enabling storing and transmission of data, the image processing module 33 also operates, in some embodiments, to apply various imaging tools such as filtering, sharpening, noise reduction, colour space conversion, contrast and brightness adjustment, and so on. Such processing serves the purpose of facilitating observation of a target by through, for example, edge enhancement, or highlighting the visible difference between the target and the background objects or terrain and compensating for the lighting effect of the sun. The image processing module 33 in these embodiments may be controlled by a user interface hosted by a ground station and issuing commands to a software suite or hardware components which are comprised within the image processing module 33.

It will be appreciated that when flying overhead, the viewing angle and range of an image capturing module 32 of a satellite will continuously change, and on-ground resolution will similarly change. The received light level (radiance) will also change. The image processing module 33 of the present embodiments has the capability to dynamically re-process the image data to counteract this effect and create a more consistent scene. In some situations the image processing module 33 may perform image processing on image data after it has been captured or on-the-fly, in order to enhance brightness or contrast, for example, but in other situations, the image processing module may issue an instruction to the image capturing module 32 to adjust focusing or sensor gain to compensate for variation, following a determination that a target is out of focus or that image quality is decreasing. The processing may take place either on-board or on the ground station as described above, or using a combination of on-board and ground-based processing as appropriate. Ground-based processing may be appropriate for complex processing tasks, whereas on-board processing might be appropriate for verification processes where imaging parameters change more slowly with time.

In some embodiments, the image processing module 33 stores a viewing angle with the captured image data, which can be used to create a quasi three-dimensional (quasi-3D) model of the scene. This enables stationary objects to be identified, meaning that moving targets can be better identified and processed using algorithms which combine multiple images and satellite or image capturing module parameters to provide a higher resolution. Equally, the multiple images of stationary objects can be combined to provide higher resolution images of these elements. The final, refined, video sequences can then be re-combined to produce a higher resolution than the originally captured data. Construction of the quasi-3D model in this manner can be performed by the image processing module 33 but may also be performed by a data processing module in the service module 31 of the satellite, or at the ground station following transfer of the video sequence to the ground station.

In the case of following a moving target, the quasi-stereo nature of captured video can be utilized to identify the quasi-3D model of the scene. For example, captured video enables the motion of a target relative to other objects which are nearer to or further from the camera to be understood, which makes it possible to identify when a moving target passes behind an object in the foreground (or into a shadow), and to predict the time at which the target will come back into view. A specific search model can be automatically started so that the system searches for the moving target using previously determined parameters such as size and colour to re-acquire the target.

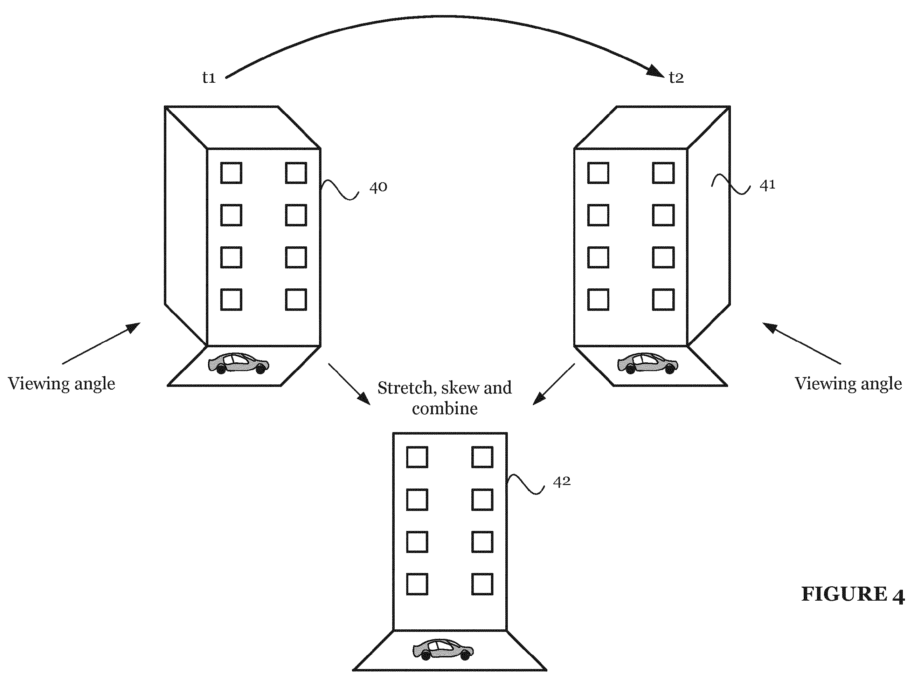

In an embodiment of the present invention, stationary objects may be used to compensate for the effect of a viewing angle as a satellite moves. This compensation is illustrated with reference to Figure 4.

Figure 4 illustrates a building 40 as observed from a satellite at a first time, t1, and the same building 41 as observed from a satellite at a second time, t2. The satellite has moved position between t1 and t2, such that the building is observed from two different viewing angles.

Since the position of the building is known, and is fixed, and since the position of the satellite can be tracked, it is possible to combine video frames through performance of stretch and skew operations as known in the art to create form of "time-lapse" video created with apparently constant viewing geometry, so that the effect of the orbit of the satellite on observing a fixed target can be eliminated, and the user can be provided with an apparently continuous video sequence of the observation of the building over time period between t1 and t2.

In some embodiments, a model of the Earth's surface is made available to the image-capturing module 32 or image processing module 33, either through local storage at the satellite, or provided from a ground station or storage on another satellite. The model enables each pixel in each captured video frame to be re-positioned back to a geographical location or co-ordinate on the Earth's surface and jitter effects removed. Stationary features can be extracted from each frame in the video sequence, either by detection through pattern processing on the frames or using the quasi-3D model described above, or by referring to a database of known stationary objects, such as geographical features, and this can be used to compute instantaneous pointing of the image capturing module or satellite, and to de-blur the video sequence.

The communications module 34 of the optical payload 30 enables communication between the satellite and one or more ground stations on Earth, and also enables communication between different satellites via a radio frequency (RF) or optical (laser)-based ISL 37, or via a link 38 to an intermediary. The different satellites may be imaging satellites within a constellation, to be described in more detail below, but the satellites may also communicate with an intermediary, such as a geostationary satellite, although it is not essential that such an intermediate satellite is geostationary.

The communication to Earth is achieved via connection 39 to the satellite's downlink and uplink, which operates to transmit and receive a variety of different communications to a ground station as known in the art. The communications module 34 operates to format the data link between the image processing module 33 and the satellite uplink/downlink. The satellite uplink/downlink may be the responsibility of the service module 31, or in other embodiments, the optical payload 30 itself. An example of data which passes over this link is an instruction or request to observe a target. The target may be defined in terms of its shape or its location, and the observation command is sent to a satellite for processing as described below. Either the satellite will act on the observation request to observe the target, or the request will be passed to another satellite for processing, depending on the satellite in a network or constellation of satellites which is best positioned to execute the requested target observation.

As described above, a target to be observed may exit the field of view 36 of a satellite, due to the relative motion of the target and the satellite. The satellite on which the components of Figure 3 are installed has a particular orbital path around the Earth, while the target may remain within a relatively small region of the Earth, and consequently there is a finite time window within which the target is within the field of view 36 of the satellite. Alternatively, while a target such as another satellite in a particular orbit may be moving rapidly relative to Earth, the observing satellite may itself be in a different orbit, leading to relative motion between the two satellites.

In these circumstances, responsibility for observation of the target is transferred from a first satellite to a second satellite which is configured similarly to the first satellite, containing the components of Figure 3. Responsibility is transferred via a handover sequence which takes place between the two satellites over their respective ISLs or via a geostationary relay or ground station, depending on the system configuration. In some embodiments, the ISL between two satellites may be considered as including an intermediary, such as a geostationary relay. On completion of the handover, the target is observed by the second satellite until the target exits the field of view of the second satellite. If the target exits the field of view of the second satellite, responsibility for observation of the satellite may return to the first satellite, or be passed to a third satellite using a similar handover process, depending on the instantaneous configuration of the constellation.

In some embodiments, in addition to collaboration between satellites, if the target moves outside the field of view, the position of the field of view can also be adjusted through a scanning mechanism (not shown) which enables the image capturing module 32 to "track" the target's movement within a particular range defined by, for example, physical movement of the direction of the optical axis of the image capturing module, such that the target is again within the field of view. Such movement may be achieved by rotating, shifting or repointing the image capturing module 32 relative to the satellite, or through moving the satellite as a whole. Single-camera tracking of this form is useful where the motion of a target relative to the field of view of the image capturing module is relatively small, so that it can be covered from a single camera without the need to collaborate with other satellites in the constellation. In these embodiments, a threshold amount of observed target movement may be set in order to define a point at which the satellite is to transition from single-camera tracking to collaborating with other satellites where larger movement is present. The amount of target movement may be calculated relative to geographical information relating to the terrain relative to which the target is moving, or on information measuring the extent to which the image capturing module has been moved during a scanning operation.

Figure 5 is a flow chart illustrating a handover process according to an embodiment of the present invention. The handover operates to enable satellites within a constellation of satellites to collaborate to observe a target. As set out below, it is preferable that the observation is continuous.

At step S1, it is determined that a target is approaching the exit of the field of view of a first satellite. The determination may be made on the basis of knowledge of the maximum geographical extent of the field of view relative to the Earth's surface, for example, based on knowledge of the available freedom of movement of the image-capturing module or the satellite as a whole, which is derived from information stored and processed by the service module of the satellite, and information relating to the position of the image-capturing module. The motion of a target may be deduced through analysis of previously-captured images, which are stored in the memory of the optical payload, so as to determine a heading and a travel speed of the target, and an estimation can be made as to the future location of the target relative to the field of view on the assumption that the determined motion continues substantially unchanged.

The approach of the target to the exit of the field of view is determined through determining a point in time at which the projected position of the target is within a predetermined distance of a location represented by the boundary of the field of view, measured in the same direction as the projected motion path of the target. For example, if a field of view is defined as a square window, and a target is moving along a line from a South West corner of the square to a North East corner of the square, it may be deduced that the target will leave the field of view when it reaches the North East corner of the square. The projected distance of the target to that corner will be measured as a function of time (taking into account target speed) along the diagonal of the square of the field of view from the South West to the North East corner and compared against a predetermined threshold. It will be appreciated that this is simply an example, however, and a target may leave a field of view when transiting across an edge of the field of view rather than a corner.

The predetermined distance may be set taking into account knowledge of the satellite constellation, for example the expected time involved in locating and acquiring the services of another satellite in the handover process. The predetermined distance thus represents a period of time or temporal buffer within which the subsequent steps of the method of the flow chart of Figure 5 can be performed. The spatial representation of this temporal buffer is referred to herein as the target's "zone of approach" to the edge of the field of view.

In the present embodiment, the determined point in time is identified as a relative time period from the current time, the current time being determined by a reference set by an on-board clock, or derived from an external timing and positioning reference provider, such as a global positioning satellite system.

At step S2, a second satellite is identified which can continue the observation of the target. The second satellite may be one which has an "idle" status with respect to target observation and is positioned geographically closest to a projected path of movement of the target as determined in step S1. The identity of the second satellite is made available to the first satellite via an ISL, but in other embodiments, this information may be communicated to the first satellite via a ground station which is tracking the movement of each satellite in the constellation and is autonomously able to perform mathematical calculation to determine the intersection between projected motion of the target and the field of view of the second satellite.

In step S3, the image processing module acquires scene information, also referred to as context information, relating to the imaging of the target. The scene information includes camera settings, such as a resolution level, focusing information, timing information (such as a time stamp, or synchronisation information), and scene radiance and colour. The scene information also contains information about the target or targets being observed, such as information defining shape and appearance, position (for example, latitude and longitude) and motion defined by a heading and a speed.

Since the second satellite will be physically located differently from the first satellite, the viewing angle of the two satellites will be different. Viewing angle information may therefore also be included within the scene information. For example, for two satellites having adjacent fields of view, a target travelling from West to East may transit through the field of view of the first satellite, exit the field of view at the Eastern edge of the field of view such that the first satellite has a viewing angle pointing to the East, and enter the field of view of the second satellite at its Western edge, such that the second satellite has a viewing angle pointing to the West.

In step S4, the acquired scene information is transferred to the identified second satellite via either the ISL or the link to the ground station. A synchronisation signal is also transferred to the second satellite vie either the ISL or the link to the ground station which represents an instruction to initiate observation of the target using the provided scene information. The synchronisation signal may be included within the scene information but may be sent separately, in which case the timing of sending the instruction can be independently controlled.

In the present embodiment, the instruction is sent when the first satellite determines that the current time corresponds to the time, determined in step S1, at which the target has reached the edge of the field of view of the field of view of the first satellite, but in other embodiments, the instruction may be sent prior to this event occurring, providing a window of overlap of observation of the target by both the first and second satellite. The timing of the instruction is dependent on the size of the zone of approach which may in turn be set based on a level of confidence associated with the projected motion of the target. In some embodiments, a level of confidence is calculated in step S1 based on the consistency of motion of the target, for example, so that a target exhibiting linear motion with a constant heading over a long period of time can be determined with high confidence to be likely to continue on that path, enabling a smaller zone of approach to be set, whereas a target exhibiting more variable motion can be determined with lower confidence to be nearing the edge of the field of view of the first satellite, potentially requiring a larger zone of approach to be set.

In step S5, on receiving the instruction from the first satellite, the second satellite uses information such as the longitude and latitude of the target to derive a pointing quaternion to ensure that it is correctly pointed to observe the target, and initiates observation of the target. In addition, the second satellite confirms to the first satellite, either over the ISL or via the ground station that observation has begun.

In step S6, the first satellite, on determining that the second satellite has initiated observation of the target, terminates its target observation routine and switches to an idle mode. The status of the first satellite as idle is communicated to the ground station.

Preferably, the time period between steps S5 and S6 is as short as possible to avoid redundant observation of the target by two satellites. A period of overlap of the observation windows of the two satellites, however, ensures that that observation of the target can be made continuous during the handover. The handover window may be defined differently for different circumstances - for slow-moving targets, the handover window may be of the order of seconds or minutes, whereas the faster targets, it will be appreciated that the handover window may be a fraction of a second.

The scene information which is transferred to the second satellite thus enables the second satellite to continue to observe the target in a manner which enables a smooth transition from the observation of the first satellite. Video sequences which are acquired by the first and second satellites can thus be combined in a manner which does not contain, or which minimises, discontinuity in imaging conditions and the relative position of the target to a position within an image frame as the image capturing module on the second satellite uses the same settings as that of the first satellite.

Video sequences can thus be stitched together using conventional video-stitching techniques, taking into account lighting conditions, viewing geometry and so on. In addition, the quasi-3D modelling described above can be used to extract moving and stationary information separately, simplifying the stitching operation. In some embodiments, the stitching takes place either in the image processing module of one of the first or second satellites, if the video sequences are sent between satellites over the ISL or via the ground station, but in other embodiments, the stitching is performed by the data processing component of the service module of a satellite. It would also be possible for video stitching to be performed at an intermediate satellite, or at the ground station, under control of the user.

In some embodiments, to improve the video stitching process, the stitching takes into account the ortho-rectification of the video sequence, that is to say that each frame of the video sequence is referenced onto a model of the Earth's surface, where the target exists in close proximity to the Earths' surface, using pointing and position information from the satellite which is recorded in real-time with the video.

As a modification of step S5 of Figure 5, a failsafe functionality may be built in to handle cases in which the projected motion of the target can be determined only with low confidence. This functionality prevents a handover process from being completed in the event that the projected motion of the target suggests that target will soon leave a field of view, but where the actual motion of the target differs from the projection to the extent that the target does not in fact leave the field of view of the observing satellite or enter the field of view of the recipient satellite in the handover. If it is determined that the target has not left the field of view of the first satellite at the projected time, based on identification of the target within an image by the image processing module of the first target, the instruction signal may not be sent, and the process returns to step S1.

Consequently, it will be appreciated that handover operation can be configured from the ground station in dependence upon the particular observation process which is being carried out. Where a target moves predictably, it may be beneficial to instruct the handover process to complete as soon as possible to maximise the smoothness of the transition and to minimise the possibility of lost data occurring during the handover. Where a target moves unpredictably, it may be beneficial to delay the handover after determining that the target has entered the zone of approach, to increase the certainty of projecting the motion of the target, and to avoid unnecessarily instructing a handover operation to take place.

While scene information is transferred between satellites as described above in a handover operation, additional steps are taken when initiating the target observation process to ensure that the first satellite can perform observation of the target. To initiate the observation process, an individual satellite in the constellation of Figure 1 receives a tasking command from the ground to observe a target at or above the Earth's surface. The command is propagated through the constellation of satellites until it reaches the satellite over the area to be recorded. Since the ground station knows the relative positions of the satellites, it is able to plot in advance a communications path through which the command should optimally be propagated to reach the intended destination. In some situations, no propagation is required and the ground station can pass the observation command directly to the intended satellite over the target area.

On receipt of the observation tasking command, the satellite points the appropriate components of its image capturing module, such as its telescope, towards the target area. In other embodiments, where the image capturing module is fixed relative to the satellite body, the service module of the satellite causes the satellite orientation to be adjusted such that the image capturing module can be directed to observe the target area. The detector system (e.g. the camera sensor) is activated and video is recorded from the scene, the video being stored in the on-board memory as described above.

The observation tasking command from the ground may be more complex than specifying only a physical area to be observed (as defined by latitude and longitude, for example). It may include information already determined about the scene (for example, a previous image to be compared with the captured video to enable a conclusion that the captured video is of the correct scene) or a specific small area may be tasked for moving target tracking. In this moving target mode, an approximate area may input by the ground station control interface, from which moving targets are extracted by the processing of from the video sequence by the image processing module or data processing performed on-board or at the ground station. The moving target is then followed by the satellite by re-pointing the telescope or the satellite. In the case that the moving target exits the field of view of the satellite, then one of the other satellites in the constellation is commanded via the inter-satellite link network to follow the target as described above.

In addition to the observation tasking command, instantaneous satellite pointing or tracking information may also be provided to a satellite from the ground station, so that video can be streamed to the ground in real time through manual control of the satellite or image capturing module.

In the embodiment represented by the flow chart of Figure 5, handover of target observation between satellites is performed on the basis of determination that a target is due to exit a field of view, based on image processing techniques and estimation of the motion of the target. In an alternative embodiment, handover of target observation may be performed on the basis of the orientation of the satellite, relative to the ground target.

During observation of a target, a satellite passes over the scene of interest and the satellite, or in some embodiments, its telescope, may be continuously re-pointed so that the detectors record the same area on the ground. Depending on circumstances, however, it may be desirable to limit the extent to which satellites or telescopes are repointed in order to ensure that the field of view is such that images of sufficient quality to enable observation can be obtained - it will be appreciated that although a target may fall within a particular field of view, if the geometry of the field of view is such that it covers a wide area of the Earth's surface, due to a shallow angle of a telescope relative to the Earth's surface, it may be difficult to observe a target accurately or to track its motion.

In such circumstances, and in an alternative embodiment of the present invention, a predetermined limit is imposed on the minimum permitted angle of the satellite or telescope relative to the ground target, for example 45°, measured between a line tangential to the Earth's surface and the optical axis of the telescope, where 90° represents direct incidence from overhead. The optical axis of the telescope may be the major axis of the satellite, for instance, where the satellite is elongate in structure, and the telescope is aligned with this major axis. When the satellite reaches 45° relative to Earth, for example, handover to another satellite may be performed to enable the target to be continuously imaged by multiple satellites.

In a similar manner to the establishment of a temporal buffer in step S1 of the method of Figure 5 in relation to the "zone of approach", to enable sufficient time to enable handover to take place at the time when the handover criterion, i.e. the target leaving the field of view of a satellite, is ultimately fulfilled, a similar temporal buffer may be established in the present embodiment in relation to the angle of the satellite or telescope. In other words, it is anticipated, using a data processing module in the service module of the satellite, that the critical orientation (e.g. 45°) will be achieved in the near future, and so when the angle reaches, for example, 48° and the trend of motion is for that angle to decrease, the steps S2 to S6 of Figure 5 may be performed as described above. Of course, the size of the relative angle at which initiation of steps S2 to S6 takes place may be varied in accordance with the user's particular requirements, in the same manner as the control of the timing as described above.

The above embodiments describe operation in which a scene is viewed from one satellite at a time, other than overlap during the transitional phases. In alternative embodiments of the present invention, the possibility exists for multiple satellites to view the same scene at the same time. In such embodiments, satellites will communicate across the inter-satellite link network to share information about moving targets. For example, if a moving target passes behind a stationary object, one satellite can pass target tracking information to the other satellites to help then find the target and continue tracking. This means that effects of obstructions such as clouds on observations can be eliminated through the satellite network dynamically locating clouds and predicting obstructions, and finding the best viewing geometry to identify gaps in the clouds, preserving continuous observation using the method sequence shown in Figure 5 or its modifications. Such viewing geometry may be calculated by the ground station, taking into account the fields of view and the positions of each satellite in the system or constellation.

The embodiments above have been described in the context of observation of a target of known existence. In alternative embodiments, a specific mode can be invoked from the ground station to command the satellite constellation to search for a specific target, whose existence may be unknown, in a known area (e.g. 100km x 100km, such as small sea or a section of road), having specific parameters (for example colour, size, three-dimensional model, heading, or speed), such as a particular vehicle.

In these alternative embodiments, a satellite receives the target parameters and begins a search pattern, such as a raster scan, of the area looking for the required object parameters, having constructed an image of the target under the instantaneous lighting and viewing conditions to serve as the basis of a reference for comparison. The image of the target may be constructed from the three-dimensional model. If the search reveals a negative result, the search area may be extended to cover a wider area, which may require handover to another search satellite, and the handover of scene or context information in the manner described above may be required in order to eliminate the effect of lighting variations, for example, so the reference image of the target remains valid. Alternatively, the original reference image may be transmitted to the new search satellite over the ISL as the context information, and the new search satellite updates the reference image based on its own lighting and viewing conditions.

It will be appreciated that modifications to the embodiments described above may be made which fall within the scope of the invention as defined by the claims, based on interchange of some or all of the described or illustrated elements. The nature of the subject matter of the invention, in terms of the configuration of the collaboration between satellites to observe a target, preserving the context of observation, can be configured in a number of different ways based on the target to be observed, the nature and movement of the observing satellite, and the configuration of the constellation of satellites.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, and combinations of compatible features of the described embodiments may be made to enable a user's requirements for particular target observation routines to be fulfilled. All structural and functional equivalents to the elements of the various embodiments described throughout this disclosure that are known or later come to be known to those of ordinary skill in the relevant art are intended to be encompassed by the claims.

## Claims

1. A satellite for observing a target from space, comprising:
an image capturing module for capturing an image of a target moving relative to the satellite;
an image processing module for processing one or more images captured by the image capturing module and for outputting the processed one or more images representing the observed target; and
a communications module for communicating with at least one other satellite via an inter-satellite link and for communicating with a ground station;
wherein the communications module is arranged to receive an instruction to capture one or more images of a target, in which the instruction contains first scene information relating to the target to be imaged, the image capture module and image processing module are arranged to initiate capture and processing of at least one image of the target using the received first scene information,
wherein the communications module is further arranged to transmit second scene information comprising information relating to the target to at least one of the other satellites such that at least one of the other satellites can initiate imaging of the target.

2. A satellite according to claim 1, wherein the first scene information comprises information defining the location of the target at the start of a time period in which the target is to be imaged by the image capturing module, and the second scene information comprises information defining the location of the target at or before the end of the time period in which the target is to be imaged by the image capturing module.

3. A satellite according to claim 2, wherein the first and/or second scene information further comprises one or more of:
target movement information;
terrain information;
image processing parameters; and
a synchronization command.

4. A satellite according to claim 3, wherein the image processing parameters comprise information relating to one or more of:
image brightness;
image contrast;
image focus;
image resolution;
image timing;
viewing angle;
field of view; and
location of satellite.

5. A satellite according to any one of the preceding claims wherein the communications module is arranged to transmit the output processed images and information defining the location of the satellite to the ground station or to at least one other satellite.

6. A satellite according to any one of claims 1 to 4, wherein the image processing module is arranged to process images of the target to output a video sequence capturing the target, in which the image processing is performed in a manner which is dependent on the field of view of the image capturing module, and the communications module is arranged to transmit the video sequence and information defining the location of the satellite to the ground station or to at least one other satellite.

7. A satellite according to any one of the preceding claims wherein the image-capturing module is arranged to search for the target within a field of view and to track the target identified by the search.

8. A satellite according to claim 7 further comprising a controller arranged to predict, from one or more images output by the image processing module, when a target is to temporarily disappear from a field of view of the image capturing module, and to transmit the second scene information to at least one of the other satellites such that at least one of the other satellites can initiate imaging of the targets during the time period when the target has temporarily disappeared from the field of view of the image capturing module.

9. A satellite according to claim 7 or claim 8 wherein the satellite is arranged to adjust its position and/or attitude to enable tracking of the moving target.

10. A satellite according to claim 9 wherein the communications module is arranged to transmit the second scene information when the angle between the satellite and the ground target reaches a predetermined limit.

11. A constellation of satellites comprising a plurality of satellites according to any one of the preceding claims, in which the output of the second scene information by the respective communications module of each satellite is such that the constellation is configured such that a continuous video sequence of a target moving relative to the constellation can be produced from a combination of processed images output by the respective image processing units of each satellite.

12. A system comprising a constellation of claim 11 and a ground station, in which the ground station is arranged to produce a continuous video sequence of the target from the combination of one or more processed images output by the respective image processing units of each satellite.

13. A system according to claim 12 in which a first satellite and a second satellite are arranged to simultaneously observe the target and the ground station is arranged to select the one or more processed images output by one of the first and second satellites for use in formation of a continuous video sequence of the target based on respective fields of view of the first and second satellites.

14. A ground station comprising:
a communications module to transmit to a first satellite a first instruction to capture one or more images of a target, in which the instruction contains first scene information relating to the target to be imaged, and to receive first one or more processed images or a first video sequence of the target and second scene information comprising information relating to the target from the first satellite;
wherein the communications module is further arranged to transmit to a second satellite a second instruction to capture one or more images of the target, in which the second instruction contains the second scene information relating to the target to be imaged, and the communications module is arranged to receive second one or more processed images of the target or a second video sequence from the second satellite,
the ground station further comprising a video processing module to combine the first and second one or more processed images of the target or the first and second video sequences of the target to form a single continuous video sequence capturing the target.

15. A ground station control method, comprising:
transmitting to a first satellite a first instruction to capture one or more images of a target, in which the instruction contains first scene information relating to the target to be imaged,
receiving first one or more processed images or a first video sequence of the target and second scene information comprising information relating to the target from the first satellite;
autonomously identifying a second satellite and transmitting to the second satellite a second instruction to capture one or more images of the target, in which the second instruction contains the second scene information relating to the target to be imaged,
receiving second one or more processed images of the target or a second video sequence from the second satellite, and
combining the first and second one or more processed images of the target or the first and second video sequences of the target to form a single continuous video sequence capturing the target.
